# EUROPEAN PATENT SPECIFICATION

(11) **EP 1 016 805 B1**
(45) Date of publication and mention of the grant of the patent: **09.04.2003**
(21) Application number: 00105842.9
(22) Date of filing: 18.06.1993
(51) Int. Cl.: F16F 9/53, F16F 13/30

(54) **Magnetorheological fluid devices**
Magnetorheologische Flüssigkeitsvorrichtungen
Dispositifs à fluide magnétorhéologique

(30) Priority: 18.06.1992 US 900567; 18.06.1992 US 900571
(43) Date of publication of application: 05.07.2000
(62) Divisional of application: 93916607.0
(73) Proprietor: LORD CORPORATION, Erie, PA 16514-0038 (US)
(72) Inventor: Carlson, J. David, Cary, NC 27511 (US); Chrzan, Michael, J., Parkway, Raleigh, NC 27606 (US); James, Frank O., Girard, PA 16417 (US)
(74) Representative: Dunlop, Brian Kenneth Charles

(56) References cited:
- FR-A- 1 094 516
- US-A- 3 059 915
- PATENT ABSTRACTS OF JAPAN vol. 008, no. 076 (M-288), 9 April 1984 (1984-04-09) & JP 58 221034 A (SHIYOUWA SEISAKUSHO:KK), 22 December 1983 (1983-12-22)
- PATENT ABSTRACTS OF JAPAN vol. 009, no. 042 (M-359), 22 February 1985 (1985-02-22) & JP 59 184007 A (NIHON HATSUJIYOU KK), 19 October 1984 (1984-10-19)
- PATENT ABSTRACTS OF JAPAN vol. 012, no. 126 (M-687), 19 April 1988 (1988-04-19) & JP 62 251539 A (HONDA MOTOR CO LTD), 2 November 1987 (1987-11-02)

## Description

### Field of the Invention

Incompressible fluids have been used in shock absorbers and other dampers, as well as in elastomeric mounts, for decades. The use of controllable fluids, electrorheological (ER) and magnetorheological (MR) fluids in dampers, was first proposed in the early 1950's by Winslow in U.S. Patent No. 2,661,596. The use of a controllable fluid in a damper affords some intriguing possibilities relative to providing widely varying damping for varying conditions encountered by the damper. Nonetheless, the use of controllable fluids was generally restricted to the area of clutches, with a few exceptions, until the mid-1980's.

### Background and Summary of the Invention

Interest in the use of controllable fluids revived in the 1980's as activity in the area of controllable dampers increased. Most of the resurgent activity has occurred relative to ER dampers and associated fluids. While interest and development of ER fluid devices continues, performance of such systems have been disappointing from three standpoints:
1) the damping forces that can be generated by an ER fluid device are limited due to the relatively low yield strengths of the available fluids;
2) ER fluids are susceptible to contamination which significantly degrades performance; and,
3) the strong electric fields required by ER fluids necessitate complicated and expensive high-voltage power supplies and complex control systems.

Faced with these performance restrictions and searching for a technological breakthrough to overcome them, Applicants turned to MR fluids with renewed interest and sought to optimize systems employing them. MR fluids inherently have higher yield strengths and are, therefore, capable of generating greater damping forces. Further, contamination does not pose the performance degradation threat for MR fluids that it does for ER fluids. Still further, MR fluids are activated by magnetic fields which are easily produced by simple, low-voltage electromagnetic coils.

It is therefore among the objects of the present invention to provide an MR damper with improved performance characteristics. Enhancements include:
■ defining dimensional/operational relationships which provide improved performance;
■ devising piston designs in which the flow path for the magnetic flux is entirely contained within the piston itself;
■ providing an improved twin-tube cylinder design capable of use (with some modification) with either the self-contained or spool piston;
■ significantly reducing or eliminating MR fluid losses from the damper;
■ providing an improved fluid valve for controlling the flow of the MR fluid to produce the desired damping forces.
These and other objects of the invention are accomplished by an apparatus for variably damping motion using an MR fluid.

JP-A-58221034 discloses a magnetorheological damper, but it does not include any means of relieving over pressurisation.

According to a first aspect of the present invention there is provided apparatus for variably damping motion using a magnetorheological fluid, the apparatus comprising:
a) a housing element for containing a volume of magnetorheological fluid, said housing including a first inner tube and a second outer tube;
b) means to fluidically interconnect said first and second tubes, said means including at least one opening near a first end of said first and second tubes and at least one second opening near a second end of said first and second tubes;
c) a piston mounted upon a piston rod for movement within said first tube;
d) valve means for controlling flow of said magnetorheological fluid, associated with at least one of said first and second openings, said valve means including:
   i) passageway means through which said magnetorheological fluid flows;
   ii) a magnetic coil for altering at least one flow characteristic of said magnetorheological fluid within said housing element to control a flow rate at which said fluid passes through said passageway means, and
e) pressure relief means for preventing fluid pressure build-up within said housing.

The housing may be a twin-tube design; the magnet may be formed on a spool-shaped piston or wound as a toroid thereon; the magnet could be positioned within the twin-tube housing rather than on the piston; loss of MR fluid can be prevented by topping the damper with a less dense fluid, using a scraper and seal combination, or using a sealless design. The piston may be formed from conventional ferrous materials (in either solid or laminate form) or from powdered metals. These features may be embodied in a mount as well as in a damper.

### Brief Description of Drawings

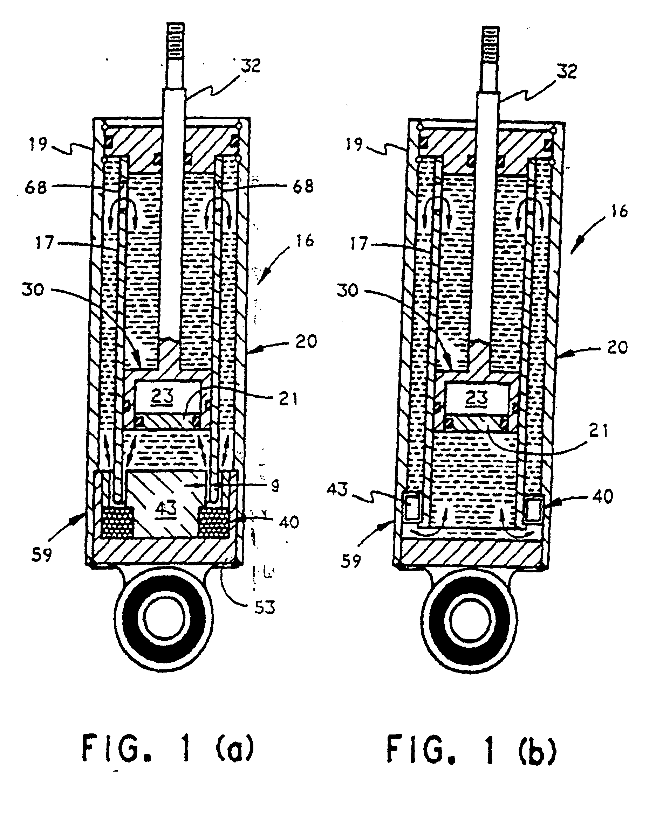

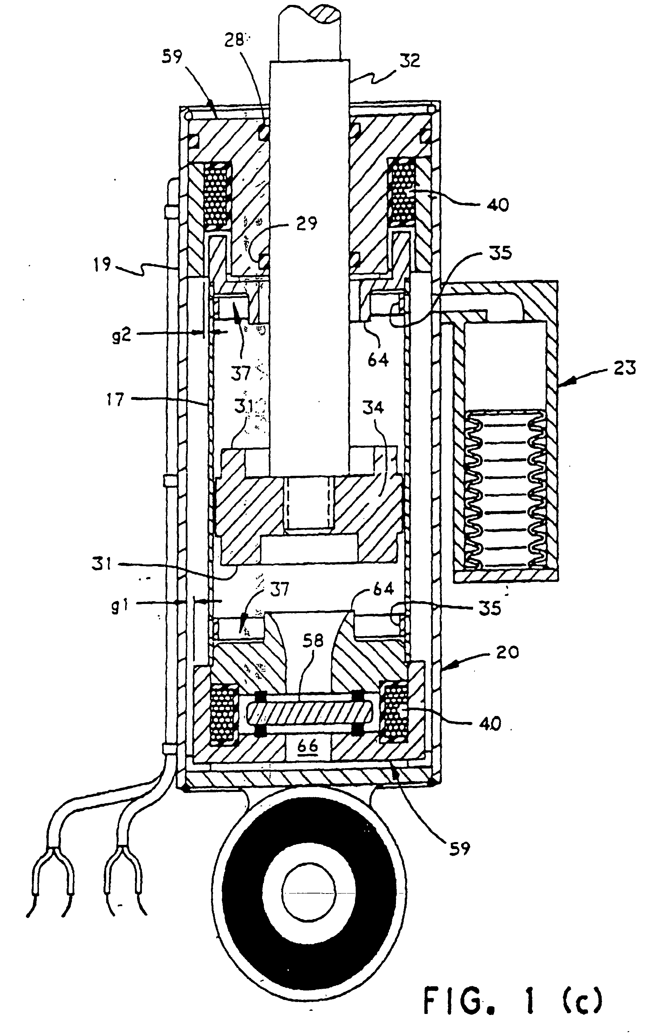

Fig. 1(a) is a cross-sectional side view of a first twin-tube housing configuration;
Fig. 1(b) is a cross-sectional side view of a second twin-tube housing configuration; and
Fig. 1(a) is a cross-sectional side view of a third twin-tube housing configuration employing two magnetic valves;

### Description of the Preferred Embodiments

The three embodiments shown in Figs 1(a) - (c) each employ a twin-tube housing 20 which allow the coil 40 to be located stationarily relative to the housing, thereby minimising flexing of wires. Housing 20 has a first inner tube 17 and a second outer tube 19. Valve member 59 comprises coil 40 which is wrapped around core element 43 and the end of inner tube 17 is stabilised between core element 43 and cup-shaped end member 53 by spacers (not shown) to define the gap g of valve member **59**. Accumulator **23** is incorporated into piston head **34**. As shown, a floating piston **21** can be used to create the accumulator **23** or, as mentioned with respect to earlier embodiments, a rolling diaphragm of a type similar to that taught in U. S. Patent No. 4,811,919 may be used. Any type of accumulator may be used.

As the piston **30** experiences a compressive stroke, the MR fluid is a) forced through gap **g**, which (in conjunction with coil **40**) functions as a valve, b) into outer tube **19**, c) through openings **68** back into the inner tube **17**. The flow characteristics of MR fluid **18** will be controlled by regulating the current flow in coil **40,** as with previous embodiments.

**Fig. 1(b)** shows a similar twin tube housing **20** in which coil **40** is toroidally wound about core **43** in segments with intermittent slots as in the **Fig. 8** embodiment of the applicant's European Patent No. 0 644 987. The slots, in conjunction with the coil **40** will function as the valve for the MR fluid **18** in this embodiment.

**Fig. 1(c)** demonstrates a third embodiment of a damper **16** which has a twin tube housing **20.** In this embodiment, two coils **40** are used, the lower coil **40** and gap **g**_{**1**} form the valve for controlling flow of the compressive stroke while upper coil **40** and gap **g**_{**2**} form the valve for controlling flow on the extension stroke. Lower valve member **59** is depicted as having a baffle plate **58,** while upper valve member **59**, which must permit passage of piston rod **32**, is of a modified solenoidal design. Upper and lower check valves **35,** which are preferably reed valves that flap open and closed responsive to fluid pressure, provide fluid bypass of upper and lower coils **40** for the compression and extension strokes, respectively.

An externally mounted accumulator **23** of the type shown in U. S. patent no. 4,858,898 is used in this embodiment which comprises an elastomeric bladder that may be filled with air or foam rubber. As with the other accumulators, accumulator **23** provides room for additional incompressible MR fluid resulting from displacement by piston rod **32** or from thermal fluid expansion. In this embodiment, no electrical connections are made through piston rod **32** and piston head **34** has a more conventional engagement with inner tube **17** (i.e., no-fluid-flow-past or through). Recesses **37** form pockets which in conjunction with hydraulic end stops **31** trap fluid and prevent piston head **34** from banging into either end cap **64.** This double-valve design is particularly useful for dampers generating large forces. In such applications, the use of two valves **59** provides more precise control and reduces the risk of cavitation of the fluid. Further, the forces generated in the compression and extension strokes can be individually tailored to fit the desired design parameters.

## Claims

1. Apparatus (16) for variably damping motion using a magnetorheological fluid, said apparatus comprising:
a) a housing element (20) for containing a volume of magnetorheological fluid, said housing including a first inner tube (17) and a second outer tube (19);
b) means to fluidically interconnect said first and second tubes, said means including at least one opening (68/g2) near a first end of said first and second tubes and at least one second opening (g/g1) near a second end of said first and second tubes;
c) a piston (30) mounted upon a piston rod (32) for movement within said first tube (17);
d) valve means for controlling flow of said magnetorheological fluid, associated with at least one of said first and second openings, said valve means including:
i) passageway means through which said magnetorheological fluid flows; and
ii)a magnetic coil (40) for altering at least one flow characteristic of said magnetorheological fluid within said housing element (20) to control a flow rate at which said fluid passes through said passageway means, the apparatus **characterised by**:
e) pressure relief means (23) for preventing fluid pressure build-up within said housing.

2. The apparatus of Claim 1 wherein said pressure relief means (23) comprises an accumulator for accommodating fluid expansion and fluid displaced by said piston rod (32).

3. The apparatus of Claim 1 or Claim 2, wherein said pressure relief means comprises at least one check valve (35).

## Patentansprüche

1. Vorrichtung (16) zum variablen Dämpfen einer Bewegung unter Verwendung eines magnetrheologischen Fluides, folgendes umfassend:
a) ein Gehäuseelement (20) zur Aufnahme eines Volumens eines magnetrheologischen Fluides, wobei das Gehäuse ein erstes inneres Rohr (17) und ein zweites äußeres Rohr (19) aufweist;
b) Mittel zum fluidleitenden Verbinden des ersten und zweiten Rohres, wobei dieses Mittel wenigstens eine Öffnung (68/g2) nahe einem ersten Ende des ersten und zweiten Rohres und wenigstens eine zweite Öffnung (g/g1) nahe einem zweiten Ende des ersten und zweiten Rohres aufweist;
c) einen Kolben (30), welcher an einer Kolbenstange (32) befestigt und innerhalb des ersten Rohres (17) bewegbar angeordnet ist;
d) Ventilmittel zum Steuern des Flusses des magnetrheologischen Fluids, welches wenigstens einer der ersten und zweiten Öffnung zugeordnet ist, wobei das Ventilmittel folgendes umfaßt:
i) ein Kanalmittel, durch welches das magnetrheologische Fluid fließt,
ii) eine magnetische Spule (40) zum Ändern wenigstens einer Fließcharakteristik des magnetrheologischen Fluids innerhalb des Gehäuseelementes (20) zum Steuern einer Flußrate, mit der das Fluid durch das Kanalmittel strömt,
wobei die Vorrichtung **gekennzeichnet ist durch**:
e) Druckentlastungsmittel (23), welches einen Druckaufbau innerhalb des Gehäuses verhindert.

2. Vorrichtung nach Anspruch 1, **dadurch gekennzeichnet, daß** das Drukkentlastungsmittel (23) einen Sammler zur Aufnahme von sich ausdehnendem Fluid und von durch die Kolbenstange (32) verdrängtes Fluid aufweist.

3. Vorrichtung nach Anspruch 1 oder 2, **dadurch gekennzeichnet, daß** das Druckentlastungsmittel wenigstens ein Rückschlagventil (35) aufweist.

## Revendications

1. Appareil (16) pour amortir de façon variable le mouvement à l'aide d'un fluide magnétorhéologique, ledit appareil comprenant :
(a) un élément de boîtier (20) pour contenir un volume de fluide magnétorhéologique, ledit boîtier comprenant un premier tube interne (17) et un second tube externe (19) ;
(b) un moyen pour intercorinecter fluidiquement lesdits premier et second tubes, ledit moyen comprenant au moins une ouverture (68/g2) près d'une première extrémité desdits premier et second tubes et au moins une seconde ouverture (g/g1) près d'une seconde extrémité desdits premier et second tubes ;
(c) un piston (30) monté sur une tige de piston (32) en vue d'un déplacement à l'intérieur dudit premier tube (17) ;
(d) un moyen de valve pour commander l'écoulement dudit fluide magnétorhéologique, associé avec au moins l'une desdites première et seconde ouvertures, ledit moyen de valve comprenant :
(i) un moyen de passage à travers lequel ledit fluide magnétorhéologique s'écoule ; et
(ii) une bobine magnétique (40) pour modifier au moins une caractéristique d'écoulement dudit fluide magnétorhéologique à l'intérieur dudit élément de boîtier (20) pour commander un débit auquel ledit fluide passe à travers ledit moyen de passage, l'appareil étant
**caractérisé par** :
(e) un moyen de réduction de pression (23) pour empêcher une accumulation de pression de fluide à l'intérieur dudit boîtier.

2. Appareil selon la revendication 1, dans lequel ledit moyen de réduction de pression (23) comprend un accumulateur pour recevoir une expansion de fluide et le fluide déplacé par ladite tige de piston (32).

3. Appareil selon la revendication 1 ou la revendication 2, dans lequel ledit moyen de réduction de pression comprend au moins une soupape de non-retour (35).
